# FASCICULE DE BREVET EUROPEEN

(11) **EP 2 895 440 B1**
(45) Date de publication et mention de la délivrance du brevet: **22.11.2017**
(21) Numéro de dépôt: 13774732.5
(22) Date de dépôt: 10.09.2013
(51) Int. Cl.: C04B 28/04, C04B 28/02, C04B 28/10, C04B 28/14, C04B 40/00, C04B 111/00, C04B 111/62

(54) **COMPOSITION DE MORTIER ANTI-POUSSIERE**
MÖRTELZUSAMMENSETZUNG MIT STAUBSCHUTZ
ANTI-DUST MORTAR COMPOSITION

(30) Priorité: 11.09.2012 FR 1258532
(43) Date de publication de la demande: 22.07.2015
(73) Titulaire: Saint-Gobain Weber, 77170 Servon (FR)
(72) Inventeur: DA SILVA, Claude, F-93600 Aulnay Sous Bois (FR); TABOULOT, Elodie, F-21000 Dijon (FR); SILVA, Luis, P-3810-332 Aveiro (PT)
(74) Mandataire: Saint-Gobain Recherche
(86) Numéro de dépôt international: PCT/FR2013/052078
(87) Numéro de publication internationale: WO 2014/041293

(56) Documents cités:
- WO-A1-2008/052618
- WO-A2-2007/135032
- US-A- 3 137 046

## Description

La présente invention est relative à une composition pulvérulente à base de liant minéral, comprenant un additif anti-poussière, à son procédé de préparation et à l'utilisation d'une telle composition dans le domaine des produits de construction, comme par exemple en tant que mortiers-colles, enduits de façades, enduits intérieurs ou de sols, chapes, joints...

Ces compositions à base de liant hydraulique comprennent différents ingrédients sous forme de poudre et sont généralement stockées à l'état pulvérulent dans des sacs. Lors de la mise en oeuvre sur chantiers, ces sacs sont vidés et la poudre est mélangée avec de l'eau : on parle d'opération de gâchage. Une fois gâché, le produit ainsi obtenu peut être appliqué sur le support choisi.
Les particules présentes dans ces compositions ont des tailles qui peuvent varier de quelques micromètres à quelques centaines de micromètres et certaines d'entre elles sont susceptibles de produire d'importantes émissions de poussières, particulièrement gênantes pour l'utilisateur lors de la manipulation du produit lorsqu'il est à l'état pulvérulent.

La réduction des émissions de poussières est par conséquent une préoccupation majeure dans ce domaine. Les demandes WO 2006/084588 et EP 1783 105 proposent d'utiliser une substance organique hydrocarbonée telles que des huiles minérales ou huiles paraffiniques comme additifs anti-poussière. La demande WO 2012/017169 décrit l'utilisation d'un additif fluide comprenant un composé hydrocarboné de type huile comprenant des groupes esters. Toutefois, les réglementations évoluent et certaines huiles d'hydrocarbures utilisées aujourd'hui présentent un risque important par inhalation.

Il existe donc un besoin de mettre au point de nouvelles compositions à base de liant hydraulique comprenant d'autres types d'additifs anti-poussières, ne présentant pas de risques EHS (Environnement, Hygiène & Sécurité), notamment présentant une très faible émission de composés organiques volatils (COV) et conservant les qualités d'usages recherchées comme par exemple les propriétés mécaniques, notamment les propriétés d'adhérence. C'est dans ce cadre que s'inscrit la présente invention.
Les inventeurs ont découvert de manière surprenante que l'ajout d'un additif à base d'un carbonate organique comprenant au moins 5 atomes de carbone dans des compositions pulvérulentes permettait avantageusement de réduire les émissions de poussières lors de leur utilisation.

La présente invention porte sur une composition pulvérulente à base de liant comprenant au moins:
- un liant minéral,
- un additif à base de carbonate organique de formule R₁-O-(CO)-O-R₂, comprenant au moins 5 atomes de carbone, dans laquelle les groupements R₁ et R₂, identiques ou différents, représentent des radicaux hydrocarbonés, alkyles ou alkylènes, linéaires, éventuellement ramifiés, saturés ou insaturés, dans une teneur comprise entre 0,4 et 1,5% en poids par rapport au poids total de la composition et
- des granulats, agrégats et/ou sable, ou autres charges inertes.

L'ajout de cet additif anti poussière ne modifie pas les performances mécaniques ou physicochimiques, notamment les performances d'adhérence, des produits obtenus à partir de cette composition.

Le carbonate organique au sens de la présente invention est un composé chimique organique comprenant une chaîne carbonée, linéaire, ramifiée ou non, saturée ou insaturée, comprenant un groupement carbonate polaire, formé d'un atome de carbone et de trois atomes d'oxygène, -O-(CO)-O-. Les carbonates présentent l'avantage d'être des composés qui ne sont pas classés comme des substances toxiques.

Classiquement, les carbonates sont synthétisés à partir de composés oxygénés comme les oxydes ou les alcools et de dioxyde de carbone.

On entend par radical hydrocarboné « alkyle », un radical monovalent linéaire ou cyclique, éventuellement substitué, provenant de l'enlèvement d'un atome d'hydrogène dans la molécule d'un hydrocarbure.

On entend par radical hydrocarboné « alkylène », un radical bivalent provenant de l'enlèvement de deux atomes d'hydrogène sur deux atomes de carbone différents d'un hydrocarbure saturé.

La teneur en additif dans la composition selon la présente invention est comprise entre 0,4 et 1,5% en poids.

L'additif comprend au moins un carbonate organique comprenant au moins 5 atomes de carbone. On a en effet constaté que l'effet anti-poussière était observé, avec ce type de composés, dans une gamme étendue de compositions pulvérulentes. Le carbonate de propylène de formule C₄H₆O₃ bien connu ne permet pas d'obtenir l'effet recherché dans les conditions normales de stockage des matériaux pulvérulents. Lorsqu'il est utilisé comme additif, l'effet anti poussière n'est plus observé après quelques jours de stockage.

A titre d'exemple de carbonates organiques comprenant au moins 5 atomes de carbone utilisables selon la présente invention, on peut citer le carbonate de butylène, le carbonate de diéthyle, le carbonate de dialylle, le carbonate de dipropyle, le carbonate de dibutyle, le carbonate de diéthylhexyle, le carbonate de butyle et de propyle, le carbonate d'allyle et de méthyle, le carbonate de dioctyle, le carbonate de dibutyloctyle, le carbonate de dihexyldécyle, le carbonate de dinonyle.

De façon préférée, le carbonate utilisé est liquide à température ambiante et est choisi parmi le carbonate de butylène, le carbonate de diéthyle, le carbonate de dialylle, le carbonate de dipropyle, le carbonate de dibutyle, le carbonate de diéthylhexyle, le carbonate de dioctyle, le carbonate de butyle et de propyle, le carbonate d'allyle et de méthyle.

L'additif selon la présente invention peut être un mélange de plusieurs carbonates organiques, à partir du moment où au moins un des carbonates présents comprend au moins 5 atomes de carbone. On peut ainsi par exemple utiliser un ou plusieurs carbonates listés ci-dessus, en mélange avec un autre carbonate choisi parmi le carbonate d'éthylène, le carbonate de propylène, le carbonate de diméthyle, le carbonate de vinylène, le carbonate d'éthyle et de méthyle.

L'additif selon la présente invention peut également comprendre, en plus du ou des carbonates organiques, un composé permettant de réduire la polarité du carbonate ou du mélange de carbonates. La teneur de ce composé varie préférentiellement entre 0,1 et 1% poids par rapport au poids total de la composition, et de préférence entre 0,1 et 0,35%poids. De façon préférée, ce composé est miscible avec les carbonates. Il est par exemple choisi parmi les huiles minérales, les huiles de paraffine, les polyoléfines ou leurs mélanges. Un additif constitué d'un mélange d'huile et de carbonates selon la présente invention permet avantageusement d'être moins visqueux qu'un additif uniquement à base d' huile.

L'additif peut se présenter sous la forme d'une émulsion, si ses constituants ne sont pas miscibles. De façon préférée, la phase continue, encore appelée phase dispersante de l'émulsion, est formée par le constituant qui est le moins polaire.

La composition selon la présente invention comprend un liant minéral qui est au moins un composé choisi parmi un liant hydraulique, une source de sulfate de calcium ou de la chaux. Le liant hydraulique est choisi, de préférence, parmi les ciments Portland, les ciments alumineux, les ciments sulfoalumineux, les ciments bélitiques, les laitiers de haut fourneau, les ciments de mélange pouzzolaniques comprenant éventuellement des cendres volantes, des fumées de silice, du calcaire, du schiste calciné et/ou des pouzzolanes naturelles ou calcinées. Le liant hydraulique peut être constitué d'un des ciments cité ci-dessus, ou bien être un mélange.

Le sulfate de calcium peut être du plâtre ou hémihydrate, du gypse ou de l'anhydrite.

La composition selon la présente invention comprend également des granulats, agrégats et/ou sables, ou autres charges inertes qui jouent notamment sur la rhéologie, l'épaisseur, la dureté, l'aspect final et la perméabilité du matériau de construction obtenu. Les granulats, agrégats et/ou sables sont généralement formés de sables siliceux, calcaires et/ou silico-calcaires et ont une granulométrie variant entre 100 µm et 3 mm. Les charges inertes peuvent par exemple être des billes de polystyrène ou de perlite, de la vermicullite.

La composition selon la présente invention peut en outre comprendre une poudre de polymère hydrodispersible et/ ou un latex.

Une poudre de polymère hydrodispersible est une poudre de polymère qui, lorsqu'elle est mélangée dans un milieu aqueux, se divise en petites particules, formant une dispersion stable dans l'eau. On citera par exemple les polymères thermoplastiques comme les copolymères éthyléniques, vinyliques, styréniques, acryliques ou esters acryliques, les polymères élastomères, comme les copolymères de styrène et de butadiène ou les nitriles.

Le terme « latex » désigne en particulier les polymères latex classiquement utilisés dans les matériaux de construction. On peut citer par exemple les latex élastomères, les latex thermoplastiques et les latex thermodurcissables. On entend par latex une émulsion ou dispersion aqueuse d'une ou plusieurs substances polymères naturelles ou synthétiques.

De préférence, la poudre de polymère de polymère hydrodispersible et/ou le latex comprend un polymère tel que le polyéthylène, le polyisoprène, le polystyrène, le polychlorure de vinyle, un polybutadiène ou un de ses dérivés, un dérivé de l'acide polyacrylique, le polyacétate de vinyle, le polylaurate de vinyle, le polyversatate de vinyle, un copolymère d'acétate de vinyle et d'éthylène, un dérivé de copolymère de styrène et d'acide acrylique, ou un copolymère de styrène et de butadiène.

De façon classique, la composition peut comprendre entre 0 et 20%poids, de préférence entre 0 et 5%poids de poudre de polymère hydrodispersible et/ ou de latex.

La composition selon la présente invention peut comprendre en outre des charges appelées fillers, calcaires ou siliceux, de granulométrie généralement inférieure à 150 µm.

Elle peut comprendre également des agents rhéologiques, des agents rétenteurs d'eau, des agents entraîneurs d'air, des agents épaississants, des agents de protection biocides, des agents dispersants, des pigments, des accélérateurs et/ou des retardateurs, ainsi que d'autres agents pour améliorer la prise, le durcissement, la stabilité des produits après application et notamment pour ajuster la couleur, l'ouvrabilité, la mise en oeuvre ou l'imperméabilité. La teneur en additifs et adjuvants varie classiquement entre 0,1 et 10%en poids par rapport au poids total de la composition.

La présente invention porte également sur un procédé de préparation de la composition décrite ci-dessus. L'additif est mélangé avec les autres constituants de ladite composition, par exemple par pulvérisation. L'additif peut également être ajouté aux autres constituants directement dans une trémie, un mélangeur ou avec un dispositif muni d'une vis sans fin.

Selon un mode de réalisation préférée, quand la composition comprend des granulats, agrégats et/ou sables ou charges inertes, l'additif est d'abord mélangé avec ces constituants. Le mélange obtenu après ajout est ensuite mélangé avec les autres constituants, c'est-à-dire avec le liant minéral et les éventuels autres additifs présents.

La présente invention porte également sur les matériaux de construction à base de liant minéral tels que des mortiers, des enduits, des plâtres, des chapes ou des joints de carrelage comprenant la composition décrite ci-dessus, une fois mélangée avec de l'eau.

L'exemple ci-dessous illustre l'invention sans en limiter la portée.

### Exemple

Une composition C1 de mortier sec est préparée en mélangeant les constituants suivants (les pourcentages donnés correspondent à des pourcentages massiques) :
47%de ciment Portland type CEM I
50%de sable de taille de grain inférieure à 1mm
3%de latex Vinnapas N 5010RE (Wacker)

A partir de cette composition C1 de référence, on prépare les compositions C2 à C6, en ajoutant différents carbonates organiques liquides à température ambiante, et de pureté supérieure à 95% seuls ou en mélange avec une huile minérale:
- 1% de propylène carbonate par rapport à la masse totale de la composition C1. On obtient ainsi la composition C2.
- 0,2 % d'huile minérale Svano 1 de Cogelsa par rapport à la masse totale de la composition C1. On obtient ainsi la composition C3.
- 1% de carbonate de diéthylhexyle par rapport à la masse totale de la composition C1. On obtient ainsi la composition C4 selon la présente invention.
- 0,8%de carbonate de diéthylhexyle et 0,2%d'huile minérale Svano 1 de Cogelsa (viscosité ISO VG d'une valeur de 22 cSt à 40°C) par rapport à la masse totale de la composition C1. On obtient ainsi la composition C5 selon la présente invention.
- 1%de carbonate de dioctyle par rapport à la masse totale de la composition C1. On obtient ainsi la composition C6 selon la présente invention.

L'efficacité des carbonates organiques à réduire les émissions de poussière des mortiers est qualifiée en observant la quantité de poussière émise lors d'une chute de 100g de mortier sec dans un tube transparent de hauteur 50cm disposé verticalement. Les compositions de mortiers sont notées en fonction de la poussière générée par cette chute : la note « 0 » équivaut à une forte émission de poussière correspondant à l'échantillon de C1 de référence sans agent anti-poussière. On observe après la chute du mortier dans le tube, une poussière épaisse remontant hors du tube. La note « ++ » équivaut à une faible émission de poussière remontant de moins de la moitié de la hauteur du tube. La note « + » équivaut aux cas intermédiaires: un dégagement de poussière remontant au-dessus de la moitié de la hauteur du tube. Les résultats obtenus pour les compositions C1 à C6 sont résumés dans le tableau 1.

**Tableau 1**

| | Réduction des émissions de poussières après 10 minutes | Réduction des émissions de poussières après 7 jours | Réduction des émissions de poussières après 28 jours |
|---|---|---|---|
| Composition C1 (référence) | 0 | 0 | 0 |
| Composition C2 (comparatif) | + | 0 | 0 |
| Composition C3 (comparatif) | ±0 | ±0 | ±0 |
| Composition C4 | ++ | ++ | + |
| Composition C5 | ++ | ++ | ++ |
| Composition C6 | ++ | ++ | + |

## Revendications

1. Composition pulvérulente de mortier à base de liant **caractérisée en ce qu'**elle comprend au moins:
- un liant minéral,
- un additif à base de carbonate organique de formule R₁-O-(CO)-O-R₂, comprenant au moins 5 atomes de carbone, dans laquelle les groupements R₁ et R₂, identiques ou différents, représentent des radicaux hydrocarbonés, alkyles ou alkylènes, linéaires, éventuellement ramifiés, saturés ou insaturés, dans une teneur comprise entre 0,4 et 1,5% en poids par rapport au poids total de la composition,
- des granulats, agrégats et/ou sable ou autres charges inertes.

2. Composition selon l'une des revendications 1 **caractérisé en ce que** l'additif est un mélange de plusieurs carbonates organiques, l'un au moins comprenant au moins 5 atomes de carbone.

3. Composition selon l'une des revendications 1 à 2 **caractérisée en ce que** l'additif comprend en outre un composé permettant de réduire la polarité du ou des carbonates organiques.

4. Composition selon la revendication 3 **caractérisé en ce que** la teneur en composé permettant de réduire la polarité est comprise entre 0,1 et 1% poids par rapport au poids total de la composition, de préférence entre 0,1 et 0,35% poids.

5. Composition selon l'une des revendications 3 ou 4 **caractérisé en ce que** ledit composé permettant de réduire la polarité est choisi parmi les huiles minérales, les huiles paraffiniques, les polyoléfines ou leurs mélanges.

6. Composition selon l'une des revendications 3 à 5 **caractérisée en ce que** l'additif est sous forme d'émulsion.

7. Composition selon l'une des revendications précédentes **caractérisée en ce que** le liant minéral est au moins un composé choisi parmi :
- un liant hydraulique choisi parmi les ciments Portland, les ciments alumineux, les ciments sulfoalumineux, les ciments bélitiques, les laitiers de haut fourneau, les ciments de mélange pouzzolaniques comprenant éventuellement des cendres volantes, des fumées de silice, du calcaire, du schiste calciné et/ou des pouzzolanes naturelles ou calcinées, seuls ou en mélange,
- une source de sulfate de calcium
- de la chaux.

8. Composition selon l'une des revendications 1 à 7 **caractérisée en ce qu'**elle comprend en outre une poudre de polymère hydrodispersible et/ou un latex.

9. Composition selon l'une des revendications 1 à 8 **caractérisée en ce qu'**elle comprend en outre des charges ou fillers, calcaires ou siliceux.

10. Composition selon l'une des revendications 1 à 9 **caractérisée en ce qu'**elle comprend en outre des agents rhéologiques, des agents rétenteurs d'eau, des agents entraîneurs d'air, des agents épaississants, des agents de protection biocides, des agents dispersants, des pigments, des accélérateurs et/ou des retardateurs.

11. Procédé de préparation d'une composition selon l'une des revendications précédentes **caractérisé en ce que** l'additif est mélangé avec les autres constituants par pulvérisation, ou directement dans une trémie, un mélangeur ou dans un dispositif muni d'une vis sans fin.

12. Procédé selon la revendication 11 **caractérisé en ce que** ledit additif est d'abord ajouté aux sables, granulats et/ou agrégats ou charges inertes présents dans la composition, le mélange obtenu étant ensuite mélangé avec le liant minéral et les additifs ou adjuvants éventuellement présents.

13. Matériaux de construction à base de liant minéral tels que des mortiers, des enduits, des plâtres, des chapes ou des joints de carrelage comprenant la composition selon l'une des revendications 1 à 10 mélangée avec de l'eau.

## Patentansprüche

1. Pulverförmige Mörtelzusammensetzung auf der Basis von Bindemittel, **dadurch gekennzeichnet, dass** sie mindestens umfasst:
- ein mineralisches Bindemittel,
- einen Zusatz auf der Basis von organischem Carbonat mit der Formel R₁-O-(CO)-O-R₂, umfassend mindestens 5 Kohlenstoffatome, wobei die identischen oder unterschiedlichen Gruppen R₁ und R₂ eventuell verzweigte, gesättigte oder ungesättigte Kohlenwasserstoff-, Alkyl- oder Alkylenradikale in einem Gehalt zwischen 0,4 und 1,5 Gew.-% im Verhältnis zum Gesamtgewicht der Zusammensetzung darstellen,
- Granulate, Zuschläge und/oder Sand oder sonstige Inert-Füllstoffe.

2. Zusammensetzung nach einem der Ansprüche 1, **dadurch gekennzeichnet, dass** der Zusatz ein Gemisch mehrerer organischer Carbonate ist, wobei mindestens eins mindestens 5 Kohlenstoffatome umfasst.

3. Zusammensetzung nach einem der Ansprüche 1 bis 2, **dadurch gekennzeichnet, dass** der Zusatz ferner eine Verbindung umfasst, die erlaubt, die Polarität des oder der organischen Carbonate zu reduzieren.

4. Zusammensetzung nach Anspruch 3, **dadurch gekennzeichnet, dass** der Gehalt an Verbindung, die erlaubt, die Polarität zu reduzieren, zwischen 0,1 und 1 Gew.-% im Verhältnis zum Gesamtgewicht der Zusammensetzung, vorzugsweise zwischen 0,1 und 0,35 Gew.-%, beträgt.

5. Zusammensetzung nach einem der Ansprüche 3 oder 4, **dadurch gekennzeichnet, dass** die Verbindung, die erlaubt, die Polarität zu reduzieren, aus den Mineralölen, den Paraffinölen, den Polyolefinen oder deren Gemischen ausgewählt ist.

6. Zusammensetzung nach einem der Ansprüche 3 bis 5, **dadurch gekennzeichnet, dass** der Zusatz in Form von Emulsion vorliegt.

7. Zusammensetzung nach einem der vorangehenden Ansprüche, **dadurch gekennzeichnet, dass** das mineralische Bindemittel mindestens eine Verbindung ist, die ausgewählt ist aus:
- einem hydraulischen Bindemittel, ausgewählt aus den Portlandzementen, den Tonerdezementen, den Sulfoaluminatzementen, den Belitzementen, den Hochofenschlacken, den Puzzolanmischzementen, umfassend eventuelle Flugaschen, Stäube von Silikat, Kalk, gebrannten Schiefer und/oder natürliche oder gebrannte Puzzolane, allein oder im Gemisch,
- eine Calciumsulfatquelle,
- Kalk.

8. Zusammensetzung nach einem der Ansprüche 1 bis 7, **dadurch gekennzeichnet, dass** sie ferner ein wasserdispergierbares Polymerpulver und/oder einen Latex umfasst.

9. Zusammensetzung nach einem der Ansprüche 1 bis 8, **dadurch gekennzeichnet, dass** sie ferner kalk- oder siliziumhaltige Füllstoffe oder Filler umfasst.

10. Zusammensetzung nach einem der Ansprüche 1 bis 9, **dadurch gekennzeichnet, dass** sie ferner rheologische Mittel, Wasserrückhaltemittel, Luftbeförderungsmittel, Verdickungsmittel, Biozidschutzmittel, Dispersionsmittel, Pigmente, Beschleuniger und/oder Verzögerer umfasst.

11. Verfahren zur Herstellung einer Zusammensetzung nach einem der vorangehenden Ansprüche, **dadurch gekennzeichnet, dass** der Zusatz mit den anderen Bestandteilen durch Pulverisieren oder direkt in einem Trichter, einem Mischer oder in einer mit einer Schnecke ausgestatteten Vorrichtung gemischt wird.

12. Verfahren nach Anspruch 11, **dadurch gekennzeichnet, dass** der Zusatz zunächst den Sanden, Granulaten und/oder Zuschlägen oder Inert-Füllstoffen, die in der Zusammensetzung vorhanden sind, hinzugefügt wird, wobei das erhaltene Gemisch dann mit dem mineralischen Bindemittel und den eventuell vorhandenen Zusätzen oder Beimischungen gemischt wird.

13. Baustoffe auf der Basis von mineralischem Bindemittel wie Mörtel, Putze, Gipse, Estriche oder Fliesenfugenmassen, umfassend die Zusammensetzung nach einem der Ansprüche 1 bis 10 im Gemisch mit Wasser.

## Claims

1. A pulverulent binder-based mortar composition, **characterized in that** it comprises at least:
- a mineral binder,
- an additive based on organic carbonate of formula R₁-O-(CO)-O-R₂ comprising at least 5 carbon atoms, in which the R₁ and R₂ groups, which may be identical or different, represent linear, optionally branched, saturated or unsaturated alkyl or alkylene hydrocarbon-based radicals, in a content between 0.4 and 1.5% by weight relative to the total weight of the composition,
- granulates, aggregates and/or sand or other inert fillers.

2. The composition as claimed in claim 1, **characterized in that** the additive is a mixture of a plurality of organic carbonates, at least one comprising at least 5 carbon atoms.

3. The composition as claimed in one of claims 1 to 2, **characterized in that** the additive also comprises a compound enabling the polarity of the organic carbonate(s) to be reduced.

4. The composition as claimed in claim 3, **characterized in that** the content of compound enabling the polarity to be reduced is between 0.1 and 1% by weight relative to the total weight of the composition, preferably between 0.1 and 0.35% by weight.

5. The composition as claimed in either of claims 3 and 4, **characterized in that** said compound enabling the polarity to be reduced is chosen from the mineral oils, the paraffin oils, the polyolefins or mixtures thereof.

6. The composition as claimed in one of claims 3 to 5, **characterized in that** the additive is in the form of an emulsion.

7. The composition as claimed in one of the preceding claims, **characterized in that** the mineral binder is at least one compound chosen from:
- a hydraulic binder chosen from Portland cements, high-alumina cements, sulfoaluminate cements, belite cements, blast furnace slags, cements of pozzolanic mixture optionally comprising fly ash, silica fumes, limestone, calcined schist and/or natural or calcined pozzolans, alone or in a mixture,
- a source of calcium sulfate,
- lime.

8. The composition as claimed in one of claims 1 to 7, **characterized in that** it also comprises a water-dispersible polymer powder and/or a latex.

9. The composition as claimed in one of claims 1 to 8, **characterized in that** it also comprises calcareous or siliceous fillers.

10. The composition as claimed in one of claims 1 to 9, **characterized in that** it also comprises rheological agents, water-retaining agents, air-entraining agents, thickeners, biocidal protective agents, dispersants, pigments, accelerators and/or retarders.

11. A method for preparing a composition as claimed in one of the preceding claims, **characterized in that** the additive is mixed with the other constituents by spraying, or directly in a hopper, a mixer or in a device provided with a worm screw.

12. The method as claimed in claim 11, **characterized in that** said additive is first added to the sands, granulates and/or aggregates or inert fillers present in the composition, the mixture obtained being subsequently mixed with the mineral binder and any additives or adjuvants which may be present.

13. Construction materials based on mineral binder, such as mortars, renders, plasters, screeds or tile grouts comprising the composition as claimed in one of claims 1 to 10 mixed with water.
